# EUROPEAN PATENT APPLICATION

(11) **EP 4 354 300 A1**
(43) Date of publication of application: **17.04.2024**
(21) Application number: 22201362.5
(22) Date of filing: 13.10.2022
(51) Int. Cl.: G06F 11/14, G06F 11/20

(54) **SERVICE ELECTRONIC CONTROL UNIT AND METHOD FOR FAULT RECOVERY IN A HETEROGENEOUS REAL-TIME SYSTEM**

(71) Applicant: Vitesco Technologies GmbH, 93055 Regensburg (DE)
(72) Inventor: Lex, Johannes, 81737 München (DE); Mader, Ralph, 81737 München (DE)
(74) Representative: Vitesco Technologies

(57) **Abstract**

The heterogeneous real-time system (10) comprises a service ECU (30) and a primary ECU (20). The primary ECU (20) comprises a microcontroller (µC) and/or a basic software (RT-BS) with a real-time operating system (RT-OS ) and a real-time application software component (RT-T) to execute a real-time task. The service ECU (30) comprises a microprocessor (µP) or a second microcontroller and a second operating system (s-OS), and at least one second application software components (SOA) to execute a second task. The service ECU (30) further comprise a back-up software (BU), which comprises a third real-time application software component (RT-T') for executing, by the service ECU (30), the real-time task of the primary ECU (20) in case of a fault of the primary EUC (20). When detecting that the primary ECU (20) comprises a fault, the service ECU (30) executes a hypervisor program (HV) causing the hypervisor program (HV) to create a second virtual machine (PAT2) for executing the third real-time application software component (RT-T') and to load the back-up software (BU) into the second virtual machine (PAT2) and to run the back-up software (BU).

## Description

### Technical Field

Aspects of the present disclosure relate to a service electronic control unit (ECU) for fault recovery in a heterogeneous real-time system and a method for fault recovery in a heterogeneous real-time system. Furthermore, the present disclosure relates to a heterogeneous real-time system comprising the service electronic control unit, a computer program and a computer-readable medium.

### Background

In the past, the software of automotive vehicles was mainly designed to execute safety critical real-time tasks. With the trend of the Internet of Things and autonomous driving, the demand for service-oriented software comes to this world at a fast pace. This leads to fundamentally different software- as well as hardware-architectures working together in one car. At the same time, the demand for fault tolerant software increases as the human driver is no longer available as backup layer in case of a fully autonomous driving car.

A classical strategy to increase the availability of critical tasks is to multiply the hardware for each critical device. This is cost intensive and does not cover common cause failures in case the same hardware and software is simply multiplied.

Typical Electric-Electronic architectures for upcoming automotive systems consist of two fundamentally different types of Electronic Control Units (ECUs). On the one side, there are ECUs which are developed to execute real-time critical software on top of a microcontroller (µC) based hardware. On the other side, there are ECUs designed for the execution of service-oriented applications on top of a microprocessor (µP) based hardware.

It is an object of the present disclosure to provide an electronic control unit (ECU) and a method for fault recovery in a heterogeneous real-time system which allows for increasing the availability of critical software functionalities in the heterogeneous real-time system.

### Summary

According to the present disclosure, the above-mentioned object is achieved by the service electronic control unit according to the features of present claim 1.

The above-mentioned object is also achieved by the method according to the features of present claim 11.

The above-mentioned object is also achieved by the heterogeneous real-time system, the computer program and the computer-readable medium according to the features of present claims 13, 14 and 15, respectively.

Advantageous embodiments are given in the dependent claims.

According to a first aspect the above-mentioned object is achieved by a service electronic control unit (service ECU) for fault recovery in a heterogeneous real-time system. The heterogeneous real-time system comprises the service ECU and a primary electronic control unit, (primary ECU).

The primary ECU comprises a microcontroller and/or a basic software with a real-time operating system and a real-time application software component to execute a real-time task, in particular to execute the real-time task according to pre-defined real-time constraints. Preferably, to the real-time task of the primary ECU a first safety integrity requirement is assigned, i.e., the primary ECU has to execute the real-time task such that the first safety integrity requirements are fulfilled. Furthermore, the primary ECU has to execute the real-time task such that the real-time task is provided within a pre-defined time frame.

The service ECU comprises a microprocessor and/or a second microcontroller, a second operating system, and at least one second application software component for executing a service-oriented application or a further real-time task. Preferably, to the service-oriented application and the further real-time task, respectively, a second safety integrity requirement is assigned, wherein the second safety integrity requirement is lower than the first safety integrity requirement.

The service ECU comprises a hypervisor program. The service ECU is configured to start-up the hypervisor program and execute the hypervisor program causing the hypervisor program to provide a first virtual machine configured to execute the at least one second application software component. The first virtual machine comprises the second operating system and the at least one second application software component.

The service ECU further comprise a non-volatile memory and a back-up software. The back-up software is to back-up the execution of the real-time task of the primary ECU in case of a fault of the primary ECU. The back-up software comprises a third real-time application software component for executing the real-time task of the primary ECU, by the service ECU, in case of a fault of the primary ECU.

The back-up software is stored in the non-volatile memory of the service ECU. The nonvolatile memory may comprise a read-only-memory (ROM). Preferably, the recovery of the real-time task is started only when a fault of the primary ECU is detected. Therefore, the service ECU is configured to monitor whether the primary ECU comprise a fault.

Furthermore, the service EUC is configured, when the service ECU detects that the primary ECU comprises a fault, to trigger or instruct the hypervisor program causing the hypervisor program to create a second virtual machine for executing the third real-time application software component and to assign processing and storage and peripheral resources from the first virtual machine to the second virtual machine. In addition, the service ECU is configured to load the back-up software into the second virtual machine and to run the back-up software. For instance, the loading of the back-up software and starting execution of the back-up software is controlled by the hypervisor program.

Furthermore, the service ECU is configured to execute the second operating system and the second application software component in the first virtual machine in parallel to the execution of the back-up software in the second virtual machine.

The hypervisor instantiates the second virtual machine as reaction to the fault, in particular, loads the backup of the critical function, e. g. of the real-time task and starts it. The hypervisor takes care of the freedom from interference. The restored critical real-time task can run then side by side with the service-oriented application or the further real-time task of the service ECU on the same microprocessor or microcontroller. In particular, the second application software component may be executed during the creation of the second virtual machine.

The primary ECU may also be named primary embedded system and the service ECU may also be named service embedded system.

The provided solution provides the advantage that it is very flexible as the software of the primary EUC can be backed up with a service ECU with completely different hardware architecture. This flexibility can result in broader product variety and/or reduced costs. As different hardware architectures can be used for the primary and the service ECU, the design diversity can be increased. Thus, the availability of the system in general can be increased.

This approach is cost effective, as no new redundant hardware is needed to increase the availability of the critical software functions.

As a result of the virtualization, the resources for the first virtual machine are reduced, and its performance might be degraded. Therefore, the recovery of the real-time task (creation of the second virtual machine and further virtualizing and loading the back-up software) is started only then when a fault of the primary ECU is detected. All system resources of the service ECU system are available to the service-oriented application and the further real-time task, respectively, during normal state and the resources for the backup are only occupied in the failover state.

The heterogeneous real-time system may comprise more than one primary ECU and the service ECU may be configured to provide for more than one primary ECU the above-described back-up function.

In at least one embodiment of the first aspect the second operating system is a portable operating system interface, POSIX, compatible operating system and/or the at least one second application software component is a service-oriented application software component for executing the service-oriented application.

In at least one embodiment of the first aspect the second operating system is a further real-time operating system and/or the at least one second application software component is a further real-time application software component for executing the further real-time task.

In at least one embodiment of the first aspect, the hypervisor program is stored in the non-volatile memory of the service ECU and the service ECU is further configured to load, in particular by a bootstrap loader of the service ECU, the hypervisor program from the non-volatile memory into a program memory of the service ECU and to start up the hypervisor program. The start-up may comprise loading a kernel module.

Loading and starting-up of the hypervisor program can be done any time before the failure of the primary ECU takes place. Since execution of the hypervisor only consumes very little resources it can be executed besides the second operating system of the service ECU permanently. Thus, the startup time of the hypervisor program itself is non-critical.

In at least one embodiment of the first aspect the back-up software further comprises a third basic software with a third real-time operating system. The recovered real-time task may need to run on the microprocessor of the service ECU whereas the original real-time task is executed on the microcontroller of the primary ECU. This fact may require a redesign and reimplementation of the real-time task for the microprocessor system. Advantageously, such an implementation increases the diversity of the real-time system and therefore contributes to an increased failure safety.

In at least one embodiment of the first aspect the basic software of the primary ECU applies safety mechanisms comprising at least a memory separation and/or a stack protection, and the third basic software of the back-up software applies safety mechanism which are compatible to the safety mechanisms the basic software of the primary ECU in the manner that the real-time application software component of the primary ECU and the third real-time application software component can use the same source code but differently compiled. This helps to reduce the effort for the redesign and reimplementation of the real-time task for a microprocessor system.

In at least one embodiment of the first aspect the third real-time operating system of the back-up software and the real-time operating system of the primary ECU are compatible in the manner that the real-time application software component of the primary ECU and the third real-time application software component can use the same source code but differently compiled. Thus, re-compilation of the real-time application software component is necessary to transfer the program, but no changes to the source code of the real-time application software component. In this way, the effort for the redesign and reimplementation of the real-time task for a microprocessor system can be minimized.

In at least one embodiment of the first aspect the third basic software of the back-up software and the basic software of the primary ECU are compatible in the manner that the real-time application software component of the primary ECU and the third real-time application software component can use the same source code but differently compiled. The effort for the redesign and reimplementation of the real-time task for a microprocessor system can be reduced.

In at least one embodiment of the first aspect the hypervisor program is configured to provide freedom from interference for the first and second virtual machine, i.e., the hypervisor program ensures that the system in the first virtual machine cannot be affected by the system in the second virtual machine and vice versa. For example, the first virtual machine is completely isolated from the second virtual machine. If one of the virtual machines crashes, the other is not affected.

In at least one embodiment of the first aspect the second virtual machine comprises a software architecture according AUTOSAR Classic Platform standard and the first virtual machine comprises a software architecture according to AUTOSAR Adaptive Platform standard.

According to a second aspect the above-mentioned object is achieved by a method for fault recovery in a heterogeneous real-time system. The heterogeneous real-time system comprises the service ECU according the first aspect and a primary electronic control unit, (primary ECU). The primary ECU comprises a microcontroller and/or a basic software with a real-time operating system and a real-time application software component to execute a real-time task according to pre-defined real-time constraints. Preferably to the real-time task of the primary ECU a first safety integrity requirement is assigned.

The method according to the second aspect comprises the following steps:
- monitoring, by the service ECU, whether the primary ECU comprise a fault and when detecting that the primary ECU comprises a fault,
   - - triggering or executing, by the service ECU, the hypervisor program causing the hypervisor program to create, in addition to an existing first virtual machine, a second virtual machine for executing the third real-time application software component and to assign processing and storage and peripheral resources from the first virtual machine to the second virtual machine and
   - -loading, by the service ECU, in particular by the hypervisor program of the service ECU, the back-up software into the second virtual machine and starting, by the service ECU, in particular by the hypervisor program of the service ECU, execution of the back-up software by the second virtual machine.

Thus, the service ECU executes the second operating system and the second application software component in the first virtual machine and the back-up software in the second virtual machine in parallel.

In at least one embodiment of the second aspect the hypervisor program is stored in the non-volatile memory of the service ECU and the method comprises the additional step of triggering or executing, by the service ECU before detecting that the primary ECU comprises a fault, a bootstrap loader of the service ECU causing the bootstrap loader to load the hypervisor program from the non-volatile memory into a program memory to start up the hypervisor program and to create a first virtual machine which comprises the second operating system and the at least one second application software component.

According to a third aspect the above-mentioned object is achieved by a heterogeneous real-time system. The heterogeneous real-time system comprises the service ECU according the first aspect and a primary electronic control unit (primary ECU). The primary ECU comprises a microcontroller and/or a basic software with a real-time operating system and a real-time application software component to execute a real-time task, in particular to execute the real-time task according to pre-defined real-time constraints. Preferably to the real-time task a first safety integrity requirement is assigned.

Optional embodiments of the first aspect may also be correspondingly present in the second and third aspect and have corresponding effects.

According to a fourth aspect the above-mentioned object is achieved by a computer program which, when executed by a processor of a service ECU, causes the service ECU to perform the steps of the method according to the second aspect.

According to a fifth aspect the above-mentioned object is achieved by a computer readable medium comprising the computer program according to the fourth aspect.

The computer program may be implemented as computer readable instruction code in any suitable programming language such as JAVA, C++, etc. The computer program may be stored on a computer-readable storage medium (CD-Rom, DVD, Blu-ray disc, removable drive, volatile or non-volatile memory, built-in memory/processor, etc.). The instruction code may program a computer or other programmable device, such as in particular a control unit for an engine of a motor vehicle, in such a way that the desired functions are executed. Further, the computer program may be provided on a network, such as the Internet, from which it may be downloaded by a user as needed.

Optional embodiments of the first and second aspect may also be correspondingly present in the fourth and fifth and have corresponding effects.

The present disclosure is described in greater detail hereinafter with reference to the accompanying drawings showing embodiments of the disclosure. These and other aspects of the present disclosure will become more fully understood upon a review of the detailed description, which follows. Other aspects, features, and embodiments of the present disclosure will become apparent to those of ordinary skill in the art, upon reviewing the following description of specific, exemplary embodiments of the present disclosure in conjunction with the accompanying figures. While features of the present disclosure may be discussed relative to certain embodiments and figures below, all embodiments of the present disclosure can include one or more of the advantageous features discussed herein. In other words, while one or more embodiments may be discussed as having certain advantageous features, one or more of such features may also be used in accordance with the various embodiments of the disclosure discussed herein. In similar fashion, while exemplary embodiments may be discussed below as device, system, or method embodiments it should be understood that such exemplary embodiments can be implemented in various devices, systems, and methods.

### Brief Description of the Drawings

Fig. 1 illustrates an exemplary embodiment of a heterogeneous real-time system,
Fig. 2 illustrates an exemplary flow chart of program for fault recovery in a heterogeneous real-time system
Fig. 3 illustrates a first phase of a fault recovery in a heterogeneous real-time system,
Fig. 4 illustrates a second phase of a fault recovery in a heterogeneous real-time system and
Fig. 5 illustrates a third phase of a fault recovery in a heterogeneous real-time system.

### Detailed Description of Embodiments

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, certain structures and components are shown in block diagram form in order to avoid obscuring such concepts.

In the figures, similar reference signs are used for elements with essentially the same function, but these elements need not be identical in all details.

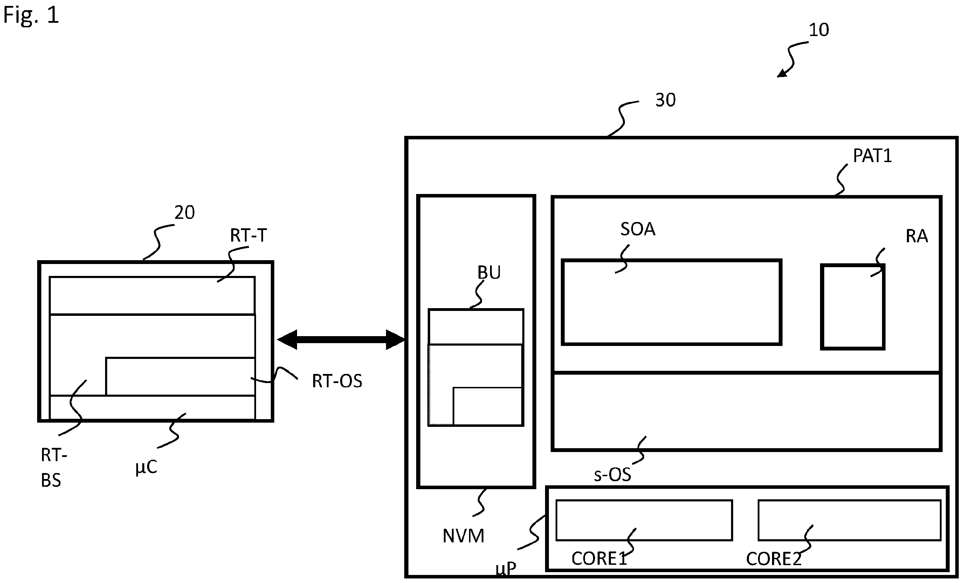

Figure 1 shows an exemplary embodiment of a heterogeneous real-time system 10, in particular of a heterogeneous automotive real-time system 10. The heterogenous real-time system 10 comprises a primary electronic control unit (primary ECU) 20 and a service electronic control unit (service ECU) 30, which are arranged, for example in a single vehicle.

The primary ECU 20 comprises a microcontroller µC, a basic software RT-BS with a real-time operating system RT-OS and a real-time application software component (RT-T) to execute a real-time task according to pre-defined real-time constraints, wherein to the real-time task a first safety integrity requirement is assigned.

The primary ECU 20 may comprise a software architecture according to the AUTOSAR Classic Platform standard.

The service ECU 30 shown in Figures 1, 3 to 5 comprises a microprocessor µP. The microprocessor µP may comprise more than one core, for example to cores CORE1, CORE2. Alternatively, ECU 30 may comprise a second microcontroller.

The service ECU 30 comprises a second operating system o-OS, for instance a portable operating system interface, POSIX, compatible operating system, and at least one second application software component SOA, for instance at least one service-oriented application software component for executing a service-oriented application. The service ECU 30 may comprise a software architecture according to the AUTOSAR Adaptive Platform standard.

Alternatively, the service ECU 30 may comprise a further real-time operating system and a further real-time application software component for executing a further real-time task according to further pre-defined real-time constraints. In this case also the service ECU 30 may comprise a software architecture according to the AUTOSAR Classic Platform standard.

The real-time system 10 shown in Figures 1, 3, 4, and 5 is heterogeneous both from software point of view, as different software architectures with different types of operating systems, as well as from hardware point of view since different processor architectures are used to execute the diverse software architectures.

To the service-oriented application provided by the second application software component of the service ECU 30 shown in Figures 1, 3, 4, and 5 a second safety integrity requirement is assigned, wherein the second integrity requirement is lower than the first integrity requirement.

The real-time task of the primary ECU 20 may relate to controlling a brake or steering system of the vehicle. The service-oriented application of the service ECU 30 may relate, for instance, to controlling a passenger compartment climate control.

For example, the real-time task of the primary ECU 20 may comprise an ASIL A grade or ASIL B grade or ASIL C grade or ASIL D grade and the service-oriented application of the service ECU 30 may comprise a QM (quality managed) grade. ASIL refers to Automotive Safety Integrity Level. It is a risk classification system defined by the ISO 26262 standard for the functional safety of road vehicles. There are QM and four ASILs - A, B, C, and D.

The service ECU 30 comprises a non-volatile memory and a back-up software BU. The back-up software BU comprises a third real-time application software component RT-T' for executing the real-time task of the primary ECU 20, by the service ECU 30, in case of a fault of the primary ECU 20. The back-up software BU is stored in the non-volatile memory of the service ECU 30.

Furthermore, the service ECU 30 comprises a hypervisor program HV (not shown in Figure 1). The service ECU 30 is configured to start-up the hypervisor program and execute the hypervisor program causing the hypervisor program to provide a first virtual machine configured to execute the at least one second application software component SOA. The first virtual machine PAT1 comprises the second operating system s-OS and the at least one second application software component SOA.

In the normal mode, the primary ECU 20 executes the real-time safety critical task or executes the real-time software application component, respectively, while the first virtual machine of the service ECU 30 executes the service-oriented application or executes the at least one second application software component SOA, respectively.

The service ECU 30 is for example configured to monitor the real-time safety critical task on the primary ECU 20 and therefore can detect a fault of the primary ECU 20. For carrying the fault recovery and fail over on the service ECU 30, respectively, including the monitoring of the safety critical real-time task on the primary ECU 20 and the control of the hypervisor program (HV), may be handled by a fault recovery software application program RA of the service ECU 30.

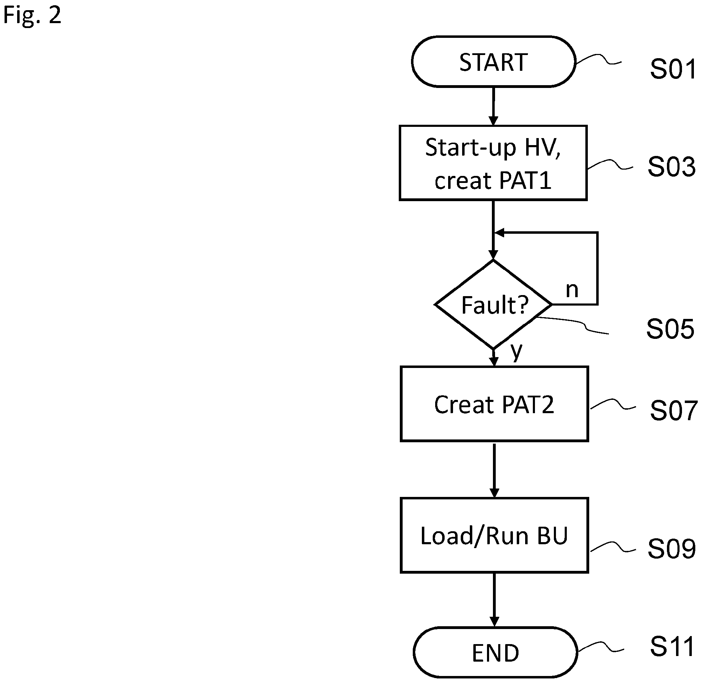

Figure 2 shows an exemplary flow chart of such a program. The program is executed by the service ECU 30.

As shown in Figure 2, the program is started in a step S01, for example when the vehicle is started.

The hypervisor program HV may be stored in the non-volatile memory of service ECU 30 and might be loaded and started up before a fault of the primary ECU 20 is detected.

Therefore, in a step S03 the program triggers or instructs for example a bootstrap loader of the service ECU 30 causing the bootstrap loader to load the hypervisor program HV from the non-volatile memory NVM into a program memory and to start up the hypervisor program HV.

The hypervisor is loaded, for instance, into a reserved memory area in the program memory that cannot be accessed by the second operating system s-OS of the service ECU 30.

Since the execution of the hypervisor program HV only consumes very little resources it can be executed besides the second operating system s-OS permanently.

Alternatively, the hypervisor program HV might be loaded and started up after a fault of the primary ECU 20 is detected. However, as the time for loading and starting up the hypervisor program HV adds up to the time until the real-time task can be executed by the service ECU 30, whether this option is possible, depends on the time constraints of the real-time task of the primary ECU 20.

In case, when the service ECU comprise a microprocessor system with a POSIX compatible operating system the hypervisor program HV comprises for example a partitioning type 2 hypervisor, in particular the jailhouse hypervisor, which is started from the POSIX compatible operating system of the service ECU 30, which is for example Linux. After the startup and initialization phase, it runs bare metal and is not affected by faults or even a crash of the host system, here for example the Linux system. The jailhouse hypervisor takes full control over the hardware and needs no external support. However, in contrast to other bare-metal hypervisors, it is loaded and configured by a normal Linux system. Its management interface is based on Linux infrastructure.

In case, when the service ECU 30 comprise a microcontroller system with a real-time operating system the hypervisor program HV may comprises for example a partitioning type 1 hypervisor.

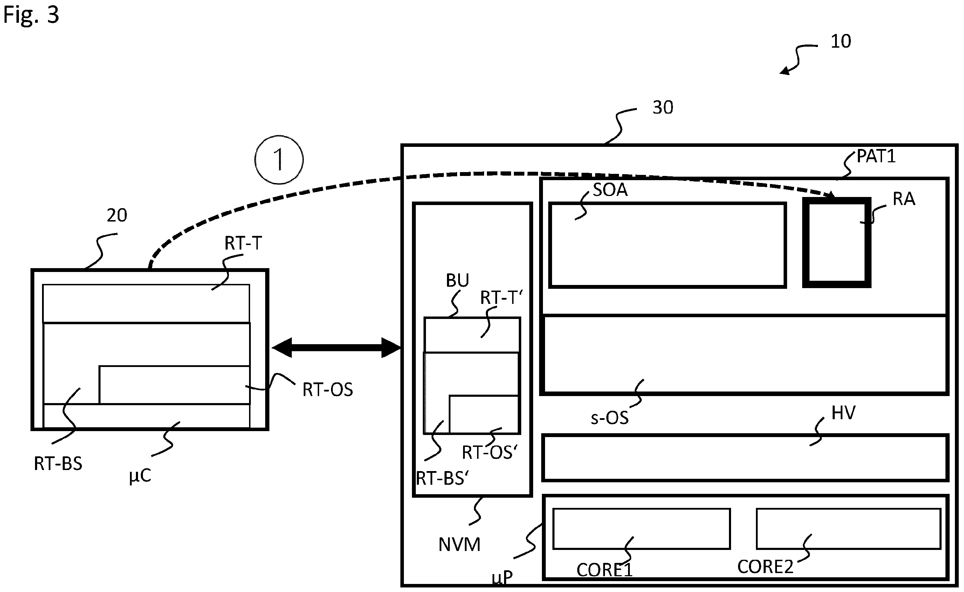

In a step S05 the program starts the monitoring whether the primary ECU 20 comprise a fault. This monitoring is, for example continued until a fault of the primary ECU 20 is detected. Step S05 is also illustrated in Figure 3, which shows again the real-time system 10 of Figure 1.

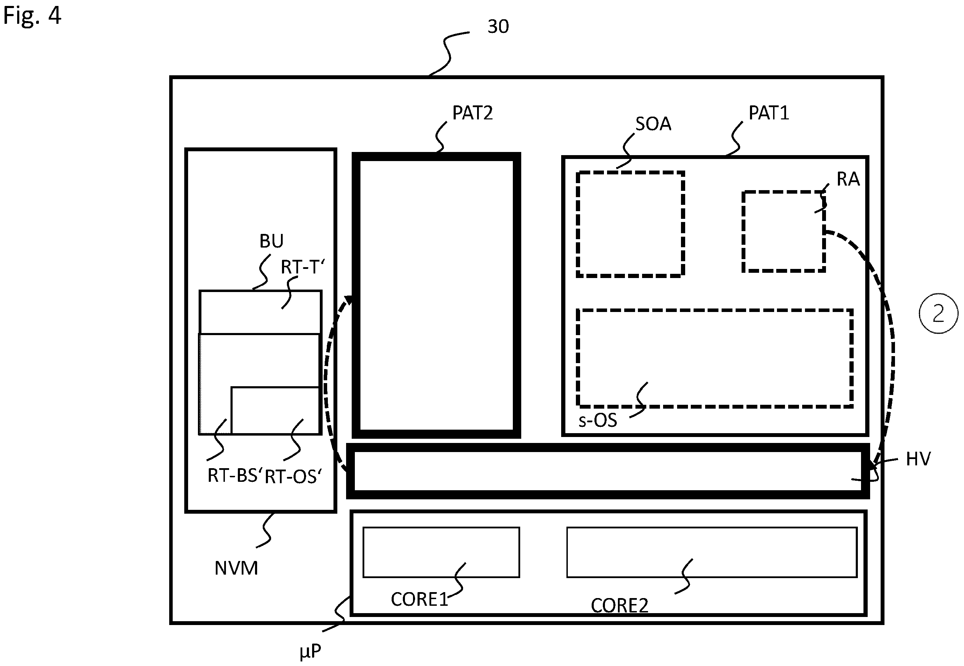

In a step S07 (Figure 2), when the program detects that the ECU comprises a fault, the program triggers or instructs the hypervisor program HV causing the hypervisor program HV to create a second virtual machine PAT2 for executing the third real-time application software component and to assign processing and storage and peripheral resources from the first virtual machine PAT1 to the second virtual machine PAT2. This step is also illustrated in Figure 4, which shows again the service ECU 30 of Figure 1.

The hypervisor program HV partitions the system and assigns physical resources like CPU-cores or memory regions to its guests in a one-to- one manner without overcommitment of resources. Thus, the overhead introduced by the hypervisor program HV is low and it has very little effect on the real-time capability to the executed backup task.

As for the execution of the at least one second application software component and the related second operating system only reduced systems resources of the first virtual machine PAT1 are available (in comparison to the normal mode, when the primary ECU 20 has no fault) the performance might be degraded.

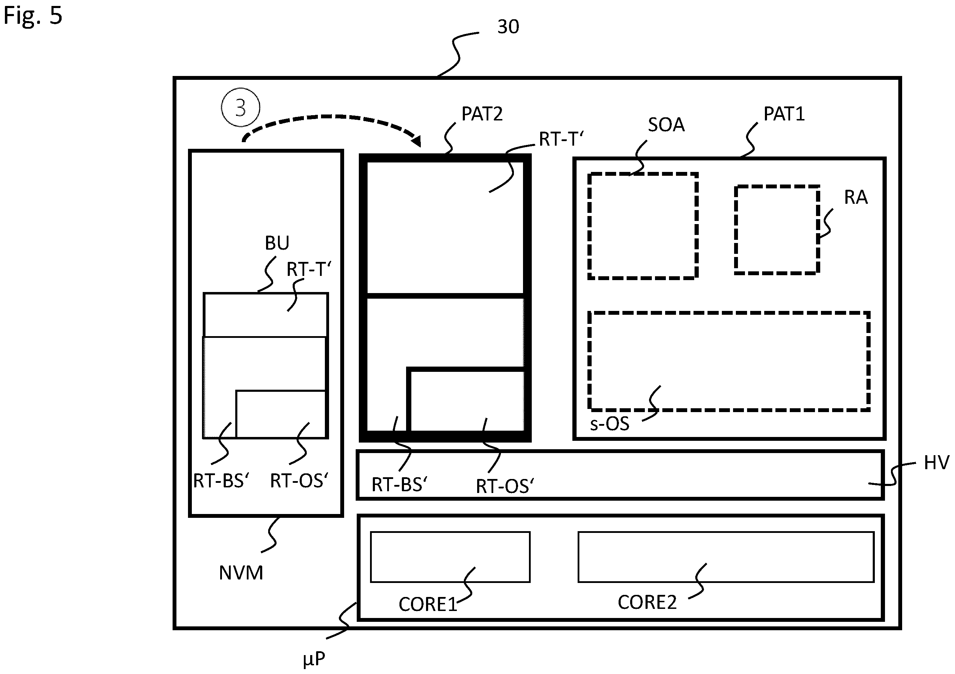

In a step S09 (Figure 2) the program instructs, for instance, the hypervisor to load the back-up software BU into the second virtual machine PAT2 and to start the execution of the back-up software BU by the second virtual machine PAT2. This step is also illustrated in Figure 5 which shows again the service ECU 30 of Figure 1.

The second virtual machine may comprise a software architecture according AUTOSAR Classic Platform standard and the first virtual machine may comprise a software architecture according to AUTOSAR Adaptive Platform standard.

In a step S11 (Figure 2) the program end, for example when the vehicle stops or parks.

### Reference Signs

- 10: heterogeneous real-time system
- 20: primary ECU
- 30: service ECU
- µC: microcontroller
- µP: microprocessor
- BU: back-up software
- CORE1, CORE2: CPU core
- HV: hypervisor program
- NVM: non-volatile memory
- o-OS: second operating system
- PAT1: first virtual machine
- PAT2: second virtual machine
- RA: fault recovery software application program
- RT-BS: real-time basic software
- RT-BS': second real-time basic software
- RT-OS: real-time operating system
- RT-OS': third real-time operating system
- RT-T: real-time application software component
- RT-T': third real-time application software component
- SOA: second application software component

## Claims

1. Service electronic control unit, service ECU, (30) for fault recovery in a heterogeneous real-time system (10), wherein
the heterogeneous real-time system (10) comprises the service ECU (30) and a primary electronic control unit, primary ECU (20),
- the primary ECU (20) comprises a microcontroller (µC) and/or a basic software (RT-BS) with a real-time operating system (RT-OS) and a real-time application software component (RT-T) for executing a real-time task,
- the service ECU (30) comprises a microprocessor (µP) or a second microcontroller (µC), a second operating system (s-OS), and at least one second application software component (SOA) for executing a service-oriented application or a further real-time task,
- the service ECU (30) further comprise a non-volatile memory (NVM), a hypervisor program (HV) and a back-up software (BU),
- the back-up software (BU) comprises a third real-time application software component (RT-T') for executing the real-time task of the primary ECU (20), by the service ECU (30), in case of a fault of the primary ECU (20),
- the back-up software (BU) is stored in the non-volatile memory (NVM) of the service ECU (30), and
the service ECU (30) is configured:
- to execute the hypervisor program (HV) causing the hypervisor program (HV) to provide a first virtual machine (PAT1) configured to execute the at least one second application software component (SOA),
- to monitor whether the primary ECU (20) comprise a fault, and when detecting that the primary ECU (20) comprises a fault
- - to trigger or execute the hypervisor program (HV) causing the hypervisor program (HV) to create a second virtual machine (PAT2) for executing the third real-time application software component (RT-T') and to assign processing and storage and peripheral resources from the first virtual machine (PAT1) to the second virtual machine (PAT2), and
- - to load the back-up software (BU) into the second virtual machine (PAT2) and to run the back-up software (BU).

2. The service electronic control unit according to claim 1, wherein to the real-time task of the primary ECU (20) a first safety integrity requirement is assigned and wherein to the service-oriented application of the service ECU (30) and the further real-time task of the service (ECU 30), respectively, a second safety integrity requirement is assigned and wherein the second safety integrity requirement is lower than the first safety integrity requirement.

3. The service ECU (30) according to claim 1 or 2, wherein the second operating system (o-OS) is a portable operating system interface, POSIX, compatible operating system and/or the at least one second application software component (SOA) is a service-oriented application software component for executing the service-oriented application.

4. The service ECU (30) according to claim 1 or 2, wherein the second operating system (o-OS) is a further real-time operating system and/or the at least one second application software component (SOA) is a further real-time application software component for executing the further real-time task.

5. The service electronic control unit according to any one of claims 1 to 4, wherein the hypervisor program (HV) is stored in the non-volatile memory (NVM) of the service ECU (30) and the service ECU (30) is further configured to load the hypervisor program (HV) from the non-volatile memory (NVM) and to start up the hypervisor program (HV).

6. The service ECU (30) according to any one of claims 1 to 5, wherein the back-up software (BU) further comprises a third basic software (RT-BS') with a third real-time operating system (RT-OS').

7. The service ECU (30) according to claim 6, wherein the third real-time operating system (RT-OS') of the back-up software (BU) and the real-time operating system (RT-OS) of the primary ECU (20) are compatible.

8. The service ECU (30) according to claim 6 or 7, wherein the third basic software (RT-BS') of the back-up software (BU) and the basic software (RT-BS) of the primary ECU (20) are compatible.

9. The service ECU (30) according to any one of claims 6 to 8, wherein the basic software (RT-BS ) of the primary ECU (20) applies safety mechanisms comprising at least a memory separation and/or a stack protection, and the third basic software (RT-BS') of the back-up software (BU) applies safety mechanism which are compatible to the safety mechanisms of the basic software (RT-BS) of the primary ECU (20).

10. The service ECU (30) according to any one of claims 1 to 9, wherein the hypervisor program (HV) is configured to provide freedom from interference for the first virtual machine (PAT1) and second virtual machine (PAT2).

11. Method for fault recovery in a heterogeneous real-time system (10), wherein
- the heterogeneous real-time system (10) comprises the service ECU (30) and a primary electronic control unit, primary ECU (20),
- the primary ECU (20) comprises a microcontroller (µC) and/or a basic software (RT-BS) with a real-time operating system (RT-OS) and a real-time application software component (RT-T') for executing a real-time task,
- the service ECU (30) comprises a microprocessor (µP) or a microcontroller, a second operating system (s-OS) and at least one second application software component (SOA) for executing a service-oriented application or a further real-time task,
- the service ECU (30) further comprise a non-volatile memory(NVM), a hypervisor program (HV) and a back-up (BU) software,
- the back-up software (BU) comprises a third real-time application software component (RT-T') for executing the real-time task of the primary ECU (20), by the service ECU (30), in case of a fault of the primary ECU (20),
- the back-up software (BU) is stored in the non-volatile memory (NVM) of the service ECU (30), and
the method comprises the following steps:
- monitoring, by the service ECU (30), whether the primary ECU (20) comprise a fault and
when detecting that the primary ECU (20) comprises a fault,
- - triggering or executing, by the service ECU (30), the hypervisor program (HV) causing the hypervisor program (HV) to create, in addition to an existing first virtual machine (PAT1), a second virtual machine (PAT2) for executing the third real-time application software component (RT-T') and to assign processing and storage and peripheral resources from the first virtual machine (PAT1) and the second virtual machine (PAT2) and
- - loading, by the service ECU (30), the back-up software (BU) into the second virtual machine (PAT2) and starting, by the service ECU (30), execution of the back-up software (BU).

12. The method according to claim 11, wherein the hypervisor program (HV) is stored in the non-volatile memory (NVM) of the service ECU (30) and the method comprises the additional steps:
- triggering or executing, by the service ECU (30) before detecting that the primary ECU (20) comprises a fault, a bootstrap loader of the service ECU (30) causing the bootstrap loader to load the hypervisor program (HV) from the non-volatile memory (NVM) to a program memory, to start up the hypervisor program (HV) and to create the first virtual machine which comprises the second operating system (s-OS), and the at least one second application software component (SOA).

13. A heterogeneous real-time system (10), wherein
- the heterogeneous real-time system (10) comprises the service ECU (30) according to any one of claims 1 to 10 and a primary electronic control unit, primary ECU (20), and
- the primary ECU (20) comprises a microcontroller (µC) and/or a basic software (RT-BS) with a real-time operating system (RT-OS) and a real-time application software component (RT-T) to execute a real-time task according to pre-defined real-time constraints, wherein to the real-time task a first safety integrity requirement is assigned.

14. Computer program which, when executed by a processor of a service ECU (30), causes the service ECU (30) to perform the steps of the method according to claim 11 or 12.

15. A computer readable medium comprising a computer program which, when the program is executed by a processor of a service ECU (30), causes the service ECU (30) to perform the steps of the method according to claim 11 or 12.
